# EUROPEAN PATENT SPECIFICATION

(11) **EP 2 705 337 B1**
(45) Date of publication and mention of the grant of the patent: **11.04.2018**
(21) Application number: 12779583.9
(22) Date of filing: 03.05.2012
(51) Int. Cl.: G01F 23/296, G01F 23/28, G10K 11/20

(54) **ULTRASONIC AIR BLANKET REFLECTOR**
REFLEKTOR MIT ULTRASCHALLLUFTMANTEL
RÉFLECTEUR ULTRASONORE À MATELAS D'AIR

(30) Priority: 03.05.2011 US 201161482093 P
(43) Date of publication of application: 12.03.2014
(73) Proprietor: Crest Oil & Gas, Inc, Trenton, New Jersey 08628 (US)
(72) Inventor: GOODSON, Michael, J., Skillman, New Jersey 08558 (US)
(74) Representative: Reeve, Nicholas Edward
(86) International application number: PCT/US2012/036389
(87) International publication number: WO 2012/151439

(56) References cited:
- WO-A1-2008/101339
- WO-A1-2010/038052
- JP-A- 2004 221 343
- JP-A- 2006 007 104
- US-A- 3 001 532
- US-A- 4 194 510
- US-A- 4 194 510
- US-A- 4 618 263
- US-A- 5 090 430
- US-A- 5 119 676
- US-A1- 2004 191 275
- US-A1- 2010 018 309

## Description

### FIELD OF THE INVENTION

This invention relates generally to tanks for ultrasonic processing, and relates more particularly to a reflective structure added to a tank to improve reflection and decrease absorption of ultrasonic energy by the tank.

### BACKGROUND OF THE INVENTION

Ultrasonic cleaning processes typically use metal tanks that contain a liquid and parts to be cleaned. Ultrasonic energy is supplied to the tank by ultrasonic transducers, which may be attached to or immersed in the tank. The walls and floor of the tank are typically 6.35 mm (0.25 inch) or 4.37 mm (8 gauge) or 3.57 mm (10 gauge) stainless steel. The walls and floor of the tank absorb some of the ultrasonic energy produced by the ultrasonic transducers, which decreases the amount of ultrasonic energy that can be employed in the cleaning processes.

It is known that ultrasonic vibrations used to excite liquids bounce off metal if there is air on the other side of the metal and the metal is relatively thin. For example with air on the other side of 1.98 mm (14 gauge) steel, ultrasonic activity has been measured to bounce off nine times more effectively than with 6.35 mm (0.25 inch) steel. The ultrasonic vibrations are reflected rather than absorbed by a thin metal panel backed with air. However, it is not practical to fabricate tanks out of 1.98 mm (14 gauge) metal because relatively thicker materials are needed for structural integrity and durability.

U.S. Patent No. 3,001,532 discloses an ultrasonic degreasing apparatus utilizing two chambers - an ultrasonic chamber and a boiling chamber. Even though reflectors are provided in the ultrasonic chamber, they are devised as structural elements with an angular surface, hence are not effective reflectors.

JP 2006-7104 discloses another ultrasonic cleaning device having a reflector. However, the reflector is placed near a middle of a cleaning vessel for generating standing waves therein.

### SUMMARY OF THE INVENTION

The invention is defined in the independent claims to which reference should now be made. Advantageous features are set forth in the dependent claims.

The features and advantages described in the specification are not all inclusive, and particularly, many additional features and advantages will be apparent to one of ordinary skill in the art in view of the drawings, specification and claims hereof. Moreover, it should be noted that the language used in the specification has been principally selected for readability and instructional purposes, and may not have been selected to delineate or circumscribe the inventive subject matter, resort to the claims being necessary to determine such inventive subject matter.

### BRIEF DESCRIPTION OF THE DRAWINGS

Figure 1 is a sectional view of a corner of a tank with a fixed air blanket reflector according to the invention.
Figure 2 is a perspective view of a tank with air blanket reflectors attached to or mounted at the walls of the tank.
Figure 3 is a sectional view of a corner of a tank with a removable air blanket reflector according to the invention.
Figure 4 is a sectional view of the removable air blanket reflector.
Figure 5 is a perspective view of the removable air blanket reflector.
Figure 6 is a perspective view of the removable air blank reflector shown in section.

### DETAILED DESCRIPTION OF THE PREFERRED EMBODIMENTS

The drawings depict various preferred embodiments of the present invention for purposes of illustration only. One skilled in the art will readily recognize from the following discussion that alternative embodiments of the structures and methods illustrated herein may be employed without departing from the principles of the invention described herein.

An air blanket reflector, according to the present invention, is a structure that is placed inside an ultrasonic tank, at or near the walls of the tank. The air blanket reflector has a relatively thin metal panel, such as 1.98 mm (14 gauge (0.0781 inch)) stainless steel, facing the interior of the tank and a cavity or pockets filled with air on the opposite side of the thin metal panel.

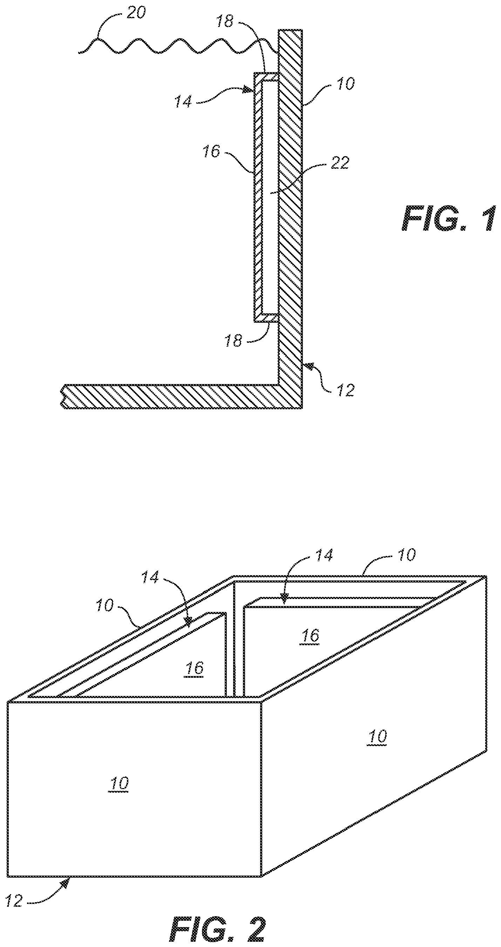

One embodiment of the air blanket reflector, as shown in Figures 1 and 2, is attached to a wall 10 of a tank 12 under the surface 20 of liquid in the tank. The air blanket reflector 14 has a metal panel 16, preferably composed of 1.98 mm (14 gauge) stainless steel. The edges of the metal panel 16 have flanges 18 that are attached to the tank wall 10, forming a cavity 22 between the metal panel 16 and the tank wall 10. The cavity is preferably about 6.35 mm (0.25 inch) to 9.53 mm (0.375 inch) in depth between the inside of the metal panel 16 and the tank wall 10. The flanges 18 of the air blanket reflector 14 are preferably welded to the tank wall 10 around all sides of the reflector. The metal panel 16 of the air blanket reflector 14 reflects ultrasonic vibrations back into the interior of the tank better than the thicker tank wall, which tends to absorb the ultrasonic vibrations. The tank walls are preferably 6.35 mm (0.25 inch) or 4.37 mm (8 gauge (0.1719 inch)) or 3.57 mm (10 gauge (0.1406 inch)) stainless steel.

The air blanket reflector should cover a significant portion of the side walls of the tank in order to efficiently reflect ultrasonic vibrations that would otherwise be absorbed by the tank walls. The air blanket reflector may also be used near the bottom of the tank to reflect ultrasonic vibrations that would otherwise be absorbed by the bottom. The air blanket reflector is most useful when the ultrasonic vibrations are generated inside the tank, such as with rod type transducers that are immersed inside the tank. However, the air blanket reflector can also be used with transducers mounted on a surface of the tank, such as the bottom or a side wall, in which case an air blanket reflector would not be mounted adjacent to that surface.

The cavity behind the metal panel of the air blanket reflector is preferably filled with unpressurized air and is sealed so that the liquid inside the tank does not enter the cavity. Other gases, such as nitrogen, for example, could be used instead to fill the cavity. Although the illustrated embodiments of the air blanket reflector show the reflector to be under the surface of the liquid, the reflector could extend upward above the level of the liquid and could provide venting at the top of the cavity. What is important is that there is air or another gas inside the cavity. Since the cavity needs to be filled with a gas for the reflector to operate properly, any liquid inside will reduce the effectiveness of the reflector and should be avoided.

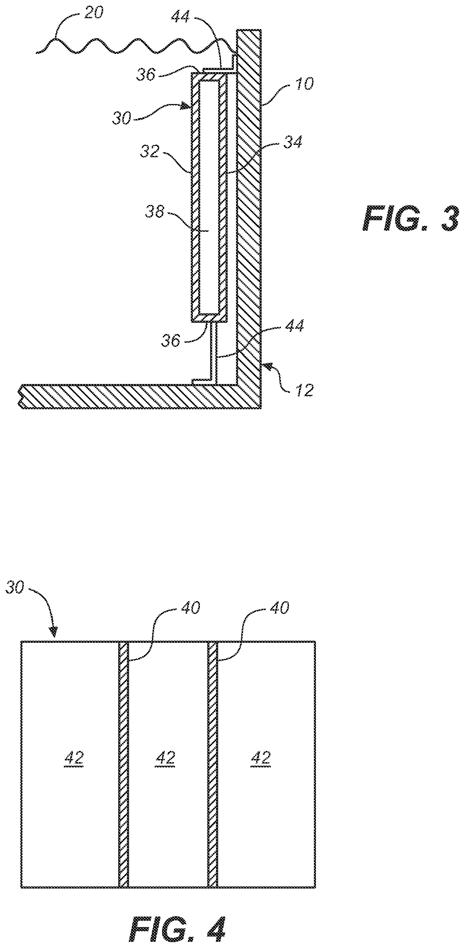

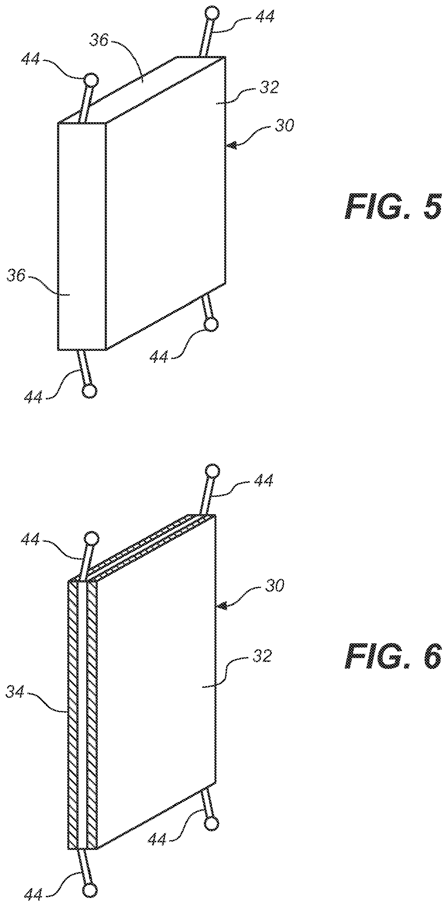

Another embodiment of the air blanket reflector, as shown in Figures 3-6, is an air blanket reflector 30 that hangs inside the tank 12 near the tank wall 10 under the surface 20 of liquid in the tank. The air blanket reflector 30 has two metal panels, 32 and 34, and perimeter walls 36 that form a sealed cavity 38, preferably containing air. Preferably at least the outer metal panel 32 of the air blanket reflector 30 is composed of 1.98 mm (14 gauge) stainless steel. The cavity 38 is preferably about 6.35 mm (0.25 inch) to 9.53 mm (0.375 inch) in depth between the inside surfaces of the metal panels 32 and 34. Internal ribs 40 may be used inside the cavity 38 for supporting the metal panels. The internal ribs 40 are spaced apart, preferably by about 304.8 mm (12 inches), and divide the cavity 38 into several pockets 42, as shown in Figure 4. The air blanket reflector can be fabricated from flat plates by welding. Mounting brackets 44 are used to mount the air blanket reflector 30 inside a tank. Preferably, four brackets 44 are used at the corners of the air blanket reflector 30 to anchor it to the bottom or wall of the tank. Figure 6 is a perspective view of the air blanket reflector 30 similar to Figure 5, but the metal faces 32 and 34 are shown in section. Since this embodiment of the air blanket reflector is mounted with brackets, it is easier to remove from the tank than the embodiment shown in Figures 1 and 2, which is welded to the tank.

In applications using rod-type ultrasonic transducers with powerful low frequency thickness mode ultrasonics, use of the ultrasonic air blanket reflector has the advantage of 14 gauge metal for reflecting sound but the strength of thicker metals, e.g., 3.57 mm (10 gauge) and 4.37 mm (8 gauge) stainless steel or even stronger 6.35 mm (0.25 inch) stainless steel, for an effective tank. The air blanket reflector is useful for ultrasonic applications such as cleaning heat exchangers in refineries, cleaning dairy equipment, cleaning pulp processing equipment, and for pharmaceutical applications. Additionally the same technology can be used for cleaning automobile and truck frames, large motors, oil and gas drilling tools and other large objects. The invention is relatively inexpensive and simple to manufacture.

From the above description, it will be apparent that the invention disclosed herein provides a novel and advantageous air blanket reflector for ultrasonic tanks. The foregoing discussion discloses and describes merely exemplary methods and embodiments of the present invention. Accordingly, the disclosure of the present invention is intended to be illustrative, but not limiting, of the scope of the invention, which is set forth in the following claims.

## Claims

1. A processing apparatus comprising:
a tank (12) having at least one wall (10), wherein the tank (12) defines an interior for containing a liquid and one or more parts to be processed, the wall (10) of the tank (12) being substantially planar and coming into contact with the liquid;
one or more ultrasonic transducers for providing ultrasonic energy to the interior of the tank (12);
an air blanket reflector (14) placed in the tank (12), wherein the air blanket reflector (14) includes a first face panel (16) located adjacent to the wall (10) of the tank (12), the first face panel (16) being substantially parallel to the wall (10) of the tank (12) such that the first face panel (16) is oriented toward the interior of the tank (12), and a cavity (22) filled with gas and containing no liquid located between the first face panel (16) and the wall (10) of the tank (12), and wherein the thickness of the first face panel (16) is less than the thickness of the walls of the tank (12).

2. A processing apparatus as recited in claim 1, wherein the air blanket reflector (14) includes flanges (18) around the perimeter of the first face panel (16) that are attached to the wall (10) of the tank (12), and wherein the cavity (22) is formed between the first face panel (16) and the wall (10) of the tank (12).

3. A processing apparatus as recited in claim 2, wherein the flanges (18) are welded to the wall (10) of the tank (12).

4. A processing apparatus as recited in claim 1, wherein the air blanket reflector includes a second face panel parallel to and spaced apart from said first face panel, and wherein the cavity is formed between the first and second face panels.

5. A processing apparatus as recited in claim 4, wherein the air blanket reflector includes walls around the perimeter of the first and second face panels, and wherein the perimeter walls are welded to the first and second face panels.

6. A processing apparatus as recited in claim 4, wherein the air blanket reflector is attached to the tank with brackets.

7. A processing apparatus as recited in claim 1, wherein the first face panel is composed of 1.98mm stainless steel.

8. A processing apparatus as recited in any one of claims 1 to 7, wherein the gas in the cavity is air.

## Patentansprüche

1. Bearbeitungsvorrichtung, umfassend:
einen Behälter (12), der wenigstens eine Wand (10) hat, wobei der Behälter (12) ein Inneres zur Aufnahme einer Flüssigkeit und von einem oder mehr zu bearbeitenden Teilen definiert, wobei die Wand (10) des Behälters (12) im Wesentlichen ebenflächig ist und mit der Flüssigkeit in Kontakt kommt;
einen oder mehr Ultraschallwandler zum Versorgen des Inneren des Behälters (12) mit Ultraschallenergie;
einen in den Behälter (12) eingesetzten Luftmantelreflektor (14), wobei der Luftmantelreflektor (14) eine erste Seitenplatte (16), die an die Wand (10) des Behälters (12) angrenzend angeordnet ist, wobei die erste Seitenplatte (16) im Wesentlichen parallel zur Wand (10) des Behälters (12) ist, so dass die erste Seitenplatte (16) zum Inneren des Behälters (12) ausgerichtet ist, und einen mit Gas gefüllten und keine Flüssigkeit enthaltenden Hohlraum (22), der sich zwischen der ersten Seitenplatte (16) und der Wand (10) des Behälters befindet, enthält und wobei die Dicke der ersten Seitenplatte (16) geringer als die Dicke der Wände des Behälters (12) ist.

2. Bearbeitungsvorrichtung nach Anspruch 1, wobei der Luftmantelreflektor (14) Flansche (18) um den Umfang der ersten Seitenplatte (16) enthält, die an der Wand (10) des Behälters (12) angebracht sind, und wobei der Hohlraum (22) zwischen der ersten Seitenplatte (16) und der Wand (10) des Behälters (12) gebildet ist.

3. Bearbeitungsvorrichtung nach Anspruch 2, wobei die Flansche (18) an der Wand (10) des Behälters (12) angeschweißt sind.

4. Bearbeitungsvorrichtung nach Anspruch 1, wobei der Luftmantelreflektor eine zweite Seitenplatte enthält, die zu bzw. von der genannten ersten Seitenplatte parallel und beabstandet ist, und wobei der Hohlraum zwischen der ersten und der zweiten Seitenplatte gebildet ist.

5. Bearbeitungsvorrichtung nach Anspruch 4, wobei der Luftmantelreflektor um den Umfang der ersten und der zweiten Seitenplatte Wände hat und wobei die Umfangswände an die erste und die zweite Seitenplatte angeschweißt sind.

6. Bearbeitungsvorrichtung nach Anspruch 4, wobei der Luftmantelreflektor mit Halterungen am Behälter angebracht ist.

7. Bearbeitungsvorrichtung nach Anspruch 1, wobei die erste Seitenplatte aus 1,89-mm-Rostfreistahl besteht.

8. Bearbeitungsvorrichtung nach einem der Ansprüche 1 bis 7, wobei das Gas im Hohlraum Luft ist.

## Revendications

1. Appareil de traitement comprenant :
une cuve (12) présentant au moins une paroi (10), dans lequel la cuve (12) définit un intérieur destiné à contenir un liquide et une ou plusieurs pièces à traiter, la paroi (10) de la cuve (12) étant sensiblement plane et entrant en contact avec le liquide ;
un ou plusieurs transducteurs ultrasonores destinés à fournir une énergie ultrasonore à l'intérieur de la cuve (12) ;
un réflecteur à matelas d'air (14) placé dans la cuve (12), dans lequel le réflecteur à matelas d'air (14) comporte un premier panneau de parement (16) situé adjacent à la paroi (10) de la cuve (12), le premier panneau de parement (16) étant sensiblement parallèle à la paroi (10) de la cuve (12) de telle sorte que le premier panneau de parement (16) soit orienté vers l'intérieur de la cuve (12) et une cavité (22) remplie de gaz et ne contenant aucun liquide située entre le panneau de parement (16) et la paroi (10) de la cuve (12), et dans lequel l'épaisseur du premier panneau de parement (16) est inférieure à l'épaisseur des parois de la cuve (12).

2. Appareil de traitement selon la revendication 1, dans lequel le réflecteur à matelas d'air (14) comporte des brides (18) autour du périmètre du premier panneau de parement (16) qui sont attachées à la paroi (10) de la cuve (12), et dans lequel la cavité (22) est formée entre le premier panneau de parement (16) et la paroi (10) de la cuve (12).

3. Appareil de traitement selon la revendication 2, dans lequel les brides (18) sont soudées à la paroi (10) de la cuve (12).

4. Appareil de traitement selon la revendication 1, dans lequel le réflecteur à matelas d'air comporte un second panneau de parement parallèle audit premier panneau de parement et espacé de celui-ci, et dans lequel la cavité est formée entre les premier et second panneaux de parement.

5. Appareil de traitement selon la revendication 4, dans lequel le réflecteur à matelas d'air comporte des parois autour du périmètre des premier et second panneaux de parement, et dans lequel les parois périmétriques sont soudées aux premier et second panneaux de parement.

6. Appareil de traitement selon la revendication 4, dans lequel le réflecteur à matelas d'air est attaché à la cuve par des supports.

7. Appareil de traitement selon la revendication 1, dans lequel le premier panneau de parement est composé d'acier inoxydable de 1,98 mm.

8. Appareil de traitement selon l'une quelconque des revendications 1 à 7, dans lequel le gaz dans la cavité est l'air.
